(19) Europäisches Patentamt

European Patent Office

Office européen des brevets

(11) **EP 1 046 005 B1**

(12) **EUROPÄISCHE PATENTSCHRIFT**

(45) Veröffentlichungstag und Bekanntmachung des Hinweises auf die Patenterteilung:
**16.06.2004 Patentblatt 2004/25**

(21) Anmeldenummer: **99953718.6**

(22) Anmeldetag: **09.09.1999**

(51) Int Cl.⁷: **F16K 31/06**

(86) Internationale Anmeldenummer:
**PCT/DE1999/002850**

(87) Internationale Veröffentlichungsnummer:
**WO 2000/017551 (30.03.2000 Gazette 2000/13)**

(54) **ELEKTROMAGNETISCH BETÄTIGBARES, HYDRAULISCHES PROPORTIONALVENTIL**

ELECTROMAGNETICALLY ACTUATABLE HYDRAULIC PROPORTIONAL VALVE

SOUPAPE PROPORTIONNELLE HYDRAULIQUE A ACTIONNEMENT ELECTROMAGNETIQUE

(84) Benannte Vertragsstaaten:
**DE FR GB IT SE**

(30) Priorität: **24.09.1998 DE 19843781**

(43) Veröffentlichungstag der Anmeldung:
**25.10.2000 Patentblatt 2000/43**

(73) Patentinhaber: **ROBERT BOSCH GMBH**
**70442 Stuttgart (DE)**

(72) Erfinder:
• **BOZKAN, Aytekin**
**D-74321 Bietigheim (DE)**
• **HOFMANN, Tilo**
**D-71636 Ludwigsburg (DE)**
• **OTT, Christof**
**D-71679 Asperg (DE)**

(56) Entgegenhaltungen:
EP-A- 0 076 459     DE-A- 19 503 487
DE-U- 9 410 219     FR-A- 1 277 797

## Beschreibung

Stand der Technik

Die Erfindung geht aus von einem elektromagnetisch betätigbaren, hydraulischen Proportionalventil entsprechend der Gattung des Anspruchs 1. Ein derartiges Ventil ist beispielsweise aus der FR-A-1 277 797 bekannt. Elektromagnetisch betätigbare Proportionalventile werden unter anderem zur Regelung des Drukkes in hydraulischen Schaltkreisen, beispielsweise in Automatikgetrieben von Kraftfahrzeugen eingesetzt. Ein derartiges Proportionalventil ist exemplarisch aus der DE-Gm 94 10 219 bekannt. Dieses Proportionalventil hat einen Magnetteil, dessen Anker auf ein Schließglied eines Ventilteils einwirkt und mit diesem ein Flachsitzventil bildet. Flachsitzventile zeichnen sich insbesondere durch ihre Unempfindlichkeit gegenüber Fluchtungsfehlern zwischen dem Anker und dem Schließglied aus, neigen allerdings aufgrund der Strömungsverhältnisse am Schließglied zu Schwingungen, die im Laufe der Betriebszeit Undichtigkeiten und Verschleiß verursachen können. Ohne Gegenmaßnahmen am Schließglied ist dessen Funktion zudem stark von der Temperatur, d.h. der Viskosität und damit der viskosen Reibung, des Druckmittels abhängig. Dies kann zu unstetigen Druck-/Strom-Kennlinien des Proportionalventils führen. Beide Effekte sind unerwünscht, da sie die Funktionseigenschaften eines angeschlossenen Hydraulikkreises beeinträchtigen.

Vorteile der Erfindung

Demgegenüber weist das erfindungsgemäße elektromagnetisch betätigbare, hydraulische Proportionalventil mit den kennzeichnenden Merkmalen des Anspruchs 1 den Vorteil auf, daß es sich gegenüber Temperatureinflüssen und strömungsbedingten Schwingungsanregungen wesentlich stabiler verhält. Die Druck-/Strom-Kennlinien des Proportionalventils haben dadurch einen konstanteren und stetigeren Verlauf, wodurch der Aufwand zur Programmierung einer Ansteuerung für das Proportionalventil minimiert wird. Die Dichteigenschaften und das Verschleißverhalten des erfindungsgemäßen Proportionalventils sind verbessert, Sensoren zur Erfassung und Kompensation von Temperatureinflüssen in Hydraulikkreisen können eingespart werden. Weitere Vorteile oder vorteilhafte Weiterbildungen der Erfindung ergeben sich aus den Unteransprüchen und der Beschreibung.

In den Unteransprüchen 3 und 4 bis 8 sind zwei Ausführungsbeispiele von Schließgliedern angegeben. Das im Anspruch 3 beschriebene Schließglied zeichnet sich durch seine einfache Ausführung und seine preisgünstige Herstellung aus, das Schließglied gemäß den Ansprüchen 4 bis 8 ist aufgrund seiner vom Anker entkoppelten Führung besonders unempfindlich gegenüber Fluchtungsfehlern. In den übrigen Unteransprüchen sind fertigungstechnisch vorteilhafte Ausgestaltungen und besonders geeignete Einsatzbereiche für die erfindungsgemäßen Proportionalventile offenbart.

Zeichnung

Zwei Ausführungsbeispiele der Erfindung sind in der Zeichnung dargestellt und in der nachfolgenden Beschreibung näher erläutert. Die Figuren 1 und 2 zeigen jeweils eines der Ausführungsbeispiele im Längsschnitt, in den Figuren 3 und 4 ist das Schließglied 60 als Einzelteil vergrößert dargestellt.

Beschreibung des Ausführungsbeispiels

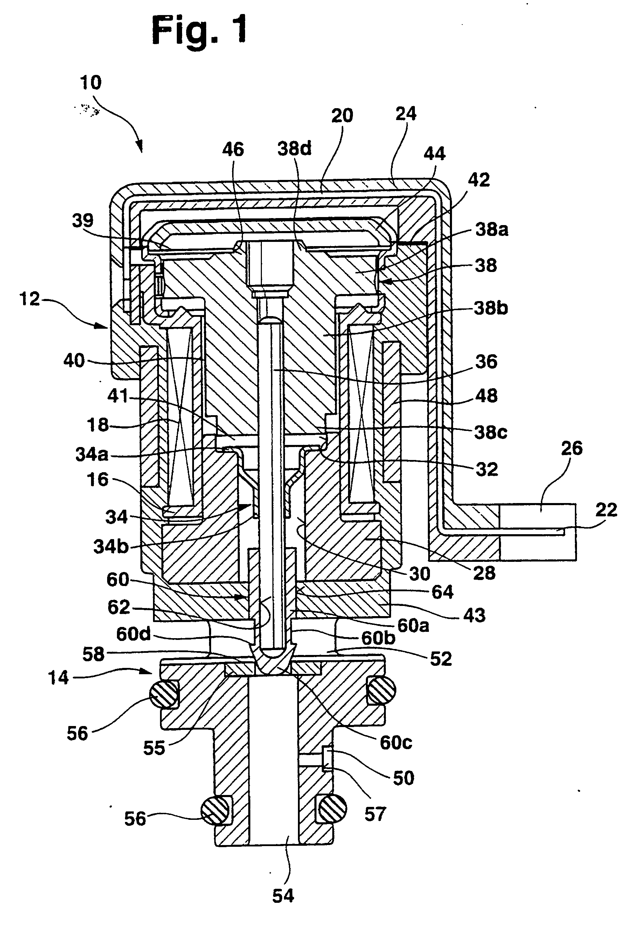

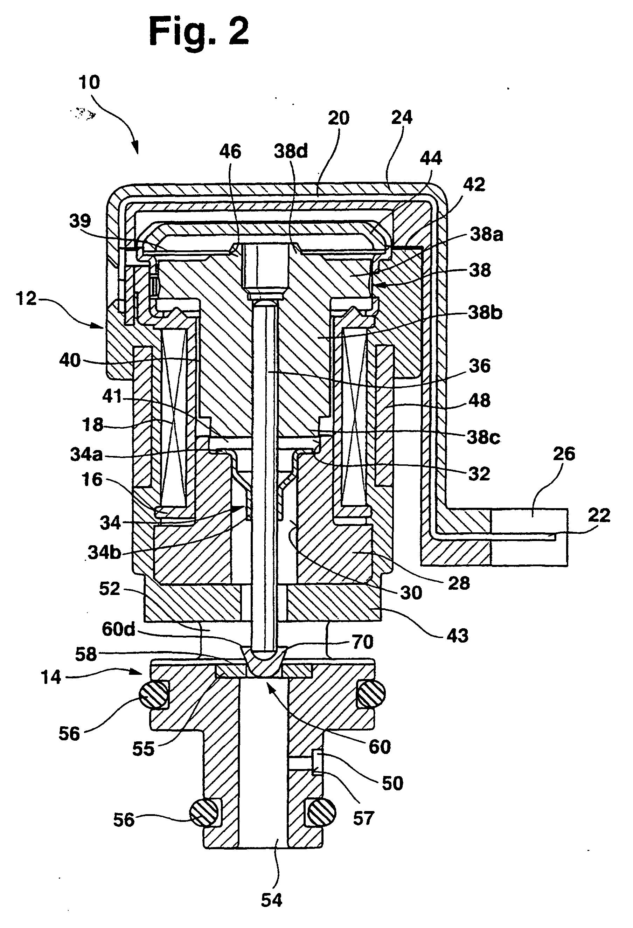

Die in den Figuren 1 und 2 dargestellten Proportionalventile 10 bestehen jeweils aus einem Magnetteil 12 und einem einstückig mit diesem verbundenen Ventilteil 14, das koaxial zum Magnetteil 12 angeordnet ist. Das Magnetteil 12 umfaßt eine auf einen Spulenkörper 16 gewickelte Spule 18, die mittels Leitungen 20 und Kontakten 22 elektrisch ansteuerbar ist. Die Leitungen 20 sind in einem Kunststoffteil 24 eingespritzt, das einstückig mit dem Spulenkörper 16 verbunden ist und an dessen freiem Ende ein die Kontakte 22 aufnehmendes Steckergehäuse 26 vorgesehen ist.

Die Spule 18 ist hohlzylindrisch ausgeführt und nimmt an ihrem dem Ventilteil 14 zugewandten Ende einen Kern 28 ortsfest auf, der abschnittsweise in das Innere der Spule 18 hineinragt. Dieser Kern 28 weist eine zentrische Längsbohrung 30 auf, die an deren im Inneren der Spule 18 gelegenen Ende in einer Flachsenkung 32 mündet. Am Boden der Flachsenkung 32 stützt sich eine Führungshülse 34 mit einem umlaufenden Bund 34a ab. Die Führungshülse 34 hat einen dem Ventilteil 14 zugewandten und sich in die Längsbohrung 30 des Kerns 28 hinein erstreckenden Hals 34b, dessen Innenwandung am ventilteilseitigen Ende der Führungshülse 34 eine Axialführung für einen Stößel 36 bildet. Letzterer ist mit einem Anker 38 fest verbunden, der sich am vom Ventilteil 14 abgewandten Ende der Spule 18 befindet.

Der Anker 38 hat die Form eines T und gliedert sich in einen die Stirnfläche der Spule 18 überdeckenden Kopf 38a und einen in die Spule 18 hineinragenden Schaft 38b. Der Schaft 38b endet in einem Vorsprung 38c, der in die Flachsenkung 32 des Kerns 28 eintauchen kann.

Um eine Relativbewegung des Ankers 38 gegenüber der Spule 18 zu ermöglichen besteht zwischen dem Schaft 38b und dem Spulenkörper 16 ein Nebenluftspalt 40. Ein Arbeitsluftspalt 41, der eine Hubbewegung des Ankers 38 erlaubt, ist zwischen den einander zugewandten Stirnflächen des Ankers 38 und des Kerns 28 erkennbar.

Zur Rückstellung und zur Zentrierung des Ankers 38 dient eine Federscheibe 39 am vom Ventilteil 14 abgewandten Ende des Proportionalventils 10. Diese Federscheibe 39 ist im Bereich ihres Außenumfangs zwischen eine Stufe eines Gehäuses 42 des Magnetteils 12 und eines dieses Gehäuse 42 nach außen abschließenden Deckels 44 eingespannt. Der Deckel 44 und das Gehäuse 42 sind miteinander verstemmt. Im Zentrum der Federscheibe 39 ist eine Ausnehmung 46 vorgesehen, die mit einem entsprechenden Vorsprung 38d des Ankers 38 ebenfalls verstemmt ist. Das Gehäuse 42 des Magnetteils 12 wird im wesentlichen von einer Umspritzung der das Magnetteil 12 bildenden Einzelbauteile mit Kunststoff erzeugt. In dieses Gehäuse 42 ist als Flußleitelement eine die Spule 18 umschließende Metallhülse 48 eingespritzt.

Das Gehäuse 42 des Proportionalventils 10 geht in das Gehäuse 43 des Ventilteils 14 über. In diesem ist ein Zulaufkanal 50, ein Rücklaufkanal 52 und ein Arbeitskanal 54 ausgebildet. während der Arbeitskanal 54 entlang der Längsachse des Proportionalventils 10 verläuft, sind der Zulauf 50 und der Rücklaufkanal 52 als Radialkanäle ausgeführt. Diese sind mittels Ringdichtungen 56 gegeneinander bzw. nach außen abgedichtet. Der Zulaufkanal 50 ist zur Ausbildung einer Blende 57 in Strömungsrichtung im Innendurchmesser einmal abgestuft, liegt abgewandt vom Magnetteil 12 und mündet stumpf in den Verbraucherkanal 50 ein. Demgegenüber ist der dem Ventilteil 14 zugewandt liegende Rücklaufkanal 52 als durchgehende, d.h. den Arbeitskanal 54 durchdringende, Ausnehmung ausgebildet.

Im Übergangsbereich vom Arbeitskanal 54 zum Rücklaufkanal 52 ist eine Lochblende 55 in das Ventilteil 14 eingespritzt. Diese ist aus Verschleißschutzgründen bspw. aus hochlegiertem Material gefertigt und weist einen scharfkantigen Ventilsitz 58 auf. Mit diesem wirkt ein vom Anker 38 betätigtes Schließglied 60 zusammen. Das Proportionalventil 10 kann daher auch als Einkantenregelventil bezeichnet werden.

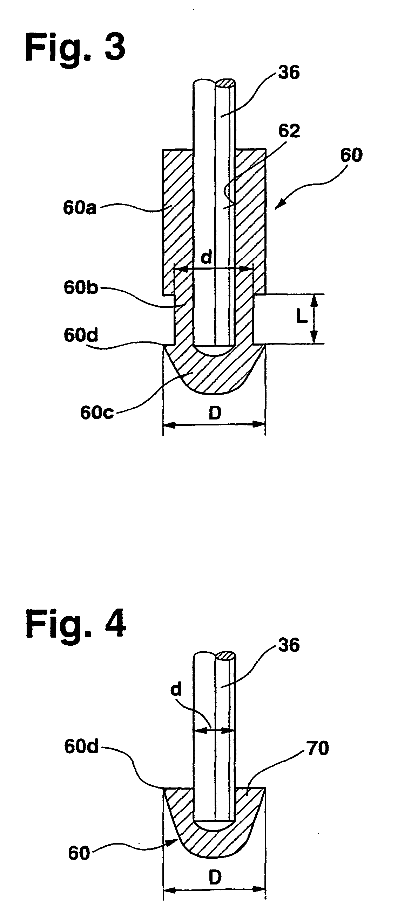

Im Ausführungsbeispiel nach Figur 1 bzw. Figur 3 ist das Schließglied 60 in einen magnetteilseitigen, zylindrischen Führungsabschnitt 60a, einen sich daran anschließenden Verbindungsabschnitt 60b und einen mit der Lochblende 55 zusammenwirkenden Dichtkörper 60c gegliedert. Der Führungsabschnitt 60a und der Verbindungsabschnitt 60b haben einen zylindrischen Querschnitt, der Dichtkörper 60c ist kegelförmig ausgeführt und aus strömungstechnischen Gründen an der ventilteilseitigen Stirnseite nach außen kuppenartig gewölbt. Der Verbindungsabschnitt 60b weist im Querschnitt die Form einer Ringnut mit beispielhaft rechtwinklig zueinander verlaufenden Wandungen auf. Dadurch ergibt sich an der Übergangsstelle vom Dichtkörper 60c zum Verbindungsabschnitt 60b eine Strömungsabrißkante 60d, die die Temperaturempfindlichkeit des Proportionalventils 10 deutlich verringert. Dazu ist die Strömungsabrißkante 60d so dimensioniert, daß der Durchmesser d des Verbindungsabschnitts 60b mit dem Durchmesser D der Strömungsabrißkante 60d in einem Verhältnis steht, dessen Wert kleiner oder gleich 0,9 ist. Desweiteren ist die Länge L des Verbindungsabschnitts 60b größer oder gleich groß als die Hälfte der Differenz aus dem Durchmesser D der Strömungsabrißkante 60d und dem Durchmesser d des Verbindungsabschnitts 60b. Beide Anforderungen sind anhand der nachfolgenden Beziehungen F1 und F2 mathematisch ausgedrückt:

$$F1: d/D \leq 0{,}9 \quad ; \quad F2: L \geq (D\text{-}d)/2 \ .$$

Darüber hinaus ist das Schließglied 60 mit einer zentrischen Sacklochbohrung 62 ausgestattet, deren Öffnung dem Magnetteil 12 zugewandt ist. In diese Sacklochbohrung 62 ragt der mit dem Anker verbundene Stößel 36 hinein, wobei zwischen dem Stößel 36 und der Sacklochbohrung 62 ein Radialspiel besteht. Dieses Radialspiel ermöglicht den Ausgleich von Fluchtungsfehlern zwischen dem Schließglied 60, dem Ventilsitz 58 und dem Stößel 36. Der Stößel 36 dient dem Schließglied 60 somit in der Hauptsache als Zentrierung bzw. als Anschlag, die eigentliche Führung des Schließglieds 60 erfolgt am Umfang des Führungsabschnitts 60a, der mit einer gehäuseseitigen Führung 64 zusammenwirkt. Deren Position ist vom Spritzwerkzeug für die Gehäuse-Ventil-Baueinheit vorgegeben und fluchtet daher sehr genau mit dem von der Öffnung der Lochblende 55 gebildeten Ventilsitz 58.

Das Ausführungsbeispiel gemäß Figur 2 bzw. 4 unterscheidet sich vom beschriebenen Ausführungsbeispiel nach Figur 1 durch eine einfachere und daher kostengünstigere Ausbildung des Schließglieds 60. Dieses besteht nur aus einem topfförmigen Dichtkörper 70 mit kegelförmiger Außenkontur und einer ebenfalls kuppenförmig nach außen gewölbten ventilteilseitigen Stirnseite. Einen Verbindungsabschnitt 60b oder einen Führungsabschnitt 60a weist dieses Schließglied 60 nicht auf. Im Unterschied zum ersten Ausführungsbeispiel ist der Dichtkörper 70 fest mit dem Stößel 36 verbunden, indem er beispielsweise auf das ventilteilseitige Ende des Stößels 36 aufgepreßt ist. Die vom Ventilsitz 58 abgewandt liegende Oberkante des Dichtkörpers 70 bildet dabei die Strömungsabrißkante 60d, zu deren Herstellung im Gegensatz zum ersten Ausführungsbeispiel keine separaten Arbeitsgänge notwendig sind. Diese Strömungsabrißkante 60d stimmt in ihren Abmessungen mit der des ersten Ausführungsbeispiels nach Figur 1 überein und erfüllt gleichermaßen die in diesem Zusammenhang erläuterten mathematischen Beziehungen F1 und F2, wobei d in Ermangelung des Verbindungsabschnitts 60b im Ausführungsbeispiel 2 den Durchmesser des Stößels 36 bezeichnet.

Die Führung des Schließglieds 60 erfolgt über die Führungen des Stößels 36 bzw. des Ankers 38, separate Führungen 64 wie beim ersten Ausführungsbeispiel sind nicht erforderlich.

Die Funktionsweise derartiger Proportionalventile 10 ist an sich bekannt. In der jeweils gezeichneten Grundstellung des Proportionalventils 10 ist die Spule 18 unbestromt, so daß der Anker 38 sich in einer von der Federscheibe 39 bestimmten Neutralposition befindet. In dieser Neutralposition bewirkt der auf das Schließglied 60 einwirkende Staudruck des zuströmenden Druckmittels, daß der Ventilsitz 58 geöffnet ist, so daß der Verbraucherkanal 54 zum Rücklaufkanal 52 druckentlastet ist.

Eine Bestromung der Spule 18 hat aufgrund der Ankerbewegung in Richtung des Ventilteils 14 eine Drosselwirkung am Ventilsitz 58 zur Folge, so daß sich im Verbraucherkanal 54 ein durch die Bestromung der Spule 18, d.h. den Hub des Ankers 38, einstellbares Druckniveau ergibt. Dieses Druckniveau läßt sich maximal auf einen Wert einstellen, der durch den Versorgungsdruck, vermindert um den Druckverlust an der zulaufseitigen Blende 57 bestimmt ist.

Durch die kegelartige Form der Dichtkörper 60c, 70 wird die Zentrierung des Schließglieds 60 in der Strömung des Druckmittels verbessert. Die entsprechend den Beziehungen F1 und F2 ausgebildete Strömungsabrißkante 60d bewirkt dabei, daß die Druckmittelströmung entlang des Schließglieds 60 bereits frühzeitig wieder abreißt, was den Temperatureinfluß auf die Druck-/Strom-Kennlinien des Proportionalventils 10 verringert. Diese Kennlinien verlaufen dadurch über weite Temperatur- bzw. Strombereiche stetig.

Selbstverständlich sind Änderungen oder Ergänzungen am beschriebenen Ausführungsbeispiel möglich, ohne vom Grundgedanken der Erfindung abzuweichen. Dieser Grundgedanke besteht insbesondere darin, herkömmlich bekannte Flachsitzventile durch strömungs- und temperaturunempfindliche Kegelsitzventile abzulösen, um dadurch Proportionalventile 10 mit besonders stabilen Funktionseigenschaften bezüglich Dichtheit, Temperaturempfindlichkeit, Verschleißfestigkeit und Kennlinienverlauf zu schaffen, ohne bezüglich Fertigungskosten Mehraufwendungen zu verursachen.

Hierzu werden erfindungsgemäß Schließglieder 60 mit kegelförmigen Dichtkörpern 60c, 70 vorgeschlagen, die eine Strömungsabrißkante 60d aufweisen.


**Patentansprüche**

1. Elektromagnetisch betätigbares, hydraulisches Proportionalventil (10) mit einem Magnetteil (12) aus einer elektrisch ansteuerbaren Spule (18), einem in das Innere der Spule (18) hineinragenden, ortsfesten Kern (28) und einem von der Spule (18) beaufschlagten, verschiebbar geführten Anker (38), der mit einem Schließglied (60) gekoppelt ist, und mit einem Ventilteil (14), das jeweils wenigstens einen Zulaufkanal (50), einen Rücklaufkanal (52), einen Arbeitskanal (54) und einen Ventilsitz (58) aufweist, der in Wirkverbindung mit dem Schließglied (60) eine Druckmittelverbindung zwischen dem Arbeitskanal (54) und dem Rücklaufkanal (52) steuert, wobei das Schließglied (60) zumindest im Bereich seines dem Ventilsitz (58) zugewandten Endes einen Dichtkörper (60c, 70) aufweist, der eine kegelförmige Außenkontur aufweist wobei die kleinere Stirnfläche des Dichtkörpers dem Ventilsitz (58) zugewandt ist, **dadurch gekennzeichnet, dass** an dem von dem Ventilsitz (58) abgewandten Ende des Dichtkörpers (60c, 70) eine Strömungsabrisskante (60d) ausgebildet ist und dass die Strömungsabrisskante (60d) durch die kegelförmige Außenkontur des Dichtkörpers (60c, 70) und eine Fläche gebildet wird, die ein mit dem Dichtkörper (60c, 70) verbundenes und mit dem Anker (38) in Wirkverbindung stehendes Teil (62, 36) auf der von dem Ventilsitz (58) abgewandten Seite des Dichtkörpers (60c, 70) ringförmig umgibt.

2. Elektromagnetisch betätigbares, hydraulisches Proportionalventil nach Anspruch 1, **dadurch gekennzeichnet, daß** die Strömungsabrißkante (60d) mit ihren Abmessungen die beiden nachfolgend genannten mathematischen Beziehungen erfüllt:

$$d/D \leq 0{,}9 \text{ und } L \geq (D\text{-}d)/2,$$

wobei D den Durchmesser der Strömungabrißkante (60d), d den Durchmesser des sich der Strömungsabrißkante (60d) in Richtung des Magnetteils (12) anschließenden Bauteils (60b, 36) und L die Länge dieses sich der Strömungsabrißkante (60d) in Richtung des Magnetteils (12) anschließenden Bauteils (60b, 36) bezeichnet.

3. Elektromagnetisch betätigbares, hydraulisches Proportionalventil nach Anspruch 1 oder 2, **dadurch gekennzeichnet**, der Dichtkörper (60c, 70) einen topfförmigen Querschnitt mit einer dem Ventilsitz (58) zugewandten, kuppenartig nach außen gewölbten Stirnseite hat.

4. Elektromagnetisch betätigbares, hydraulisches Proportionalventil nach einem der Ansprüche 1 bis 3, **dadurch gekennzeichnet, daß** der Anker (38) mittels eines Stößels (36) auf das Schließglied (60) einwirkt und daß der Dichtkörper (70) des Schließglieds (60) an diesem Stößel (36) befestigt ist.

5. Elektromagnetisch betätigbares, hydraulisches Proportionalventil nach einem der Ansprüche 1 bis 4, **dadurch gekennzeichnet, daß** sich dem Dichtkörper (60c) des Schließglieds (60) in Richtung des Magnetteils (12) ein Verbindungsabschnitt (60b) und daran ein Führungsbereich (60a) anschließt.

6. Elektromagnetisch betätigbares, hydraulisches Proportionalventil nach Anspruch 5, **dadurch gekennzeichnet, daß** der Führungsbereich (60a) und der Verbindungsabschnitt (60b) zylindrische Querschnitte haben.

7. Elektromagnetisch betätigbares, hydraulisches Proportionalventil nach einem der Ansprüche 5 oder 6, **dadurch gekennzeichnet, daß** der Verbindungsabschnitt (60b) zwischen dem Dichtkörper (60c) und dem Führungsbereich (60a) des Schließglieds (60) von einer Ringnut mit im wesentlichen rechteckigem oder quadratischem Querschnitt gebildet ist.

8. Elektromagnetisch betätigbares, hydraulisches Proportionalventil nach einem der Ansprüche 5 bis 7, **dadurch gekennzeichnet, daß** das Schließglied (60) eine zentrische und im Bereich des Dichtkörpers (60c) verschlossene Sacklochbohrung (62) aufweist, in die der Stößel (36) abschnittsweise hineinragt.

9. Elektromagnetisch betätigbares, hydraulisches Proportionalventil nach einem der Ansprüche 5 bis 8, **dadurch gekennzeichnet, daß** der Anker (38) mittels eines Stößels (36) auf das Schließglied (60) einwirkt, und daß zwischen diesem Schließglied (60) und dem Stößel (36) wenigstens eine, Radialbewegungen zwischen den beiden Bauteilen zulassende Wirkverbindung besteht.

10. Elektromagnetisch betätigbares, hydraulisches Proportionalventil nach einem der Ansprüche 1 bis 9, **dadurch gekennzeichnet, daß** der Ventilsitz (58) des Ventilteils (14) von einer Bohrung gebildet ist, deren Mündung zumindest im Bereich des Schließglieds (60) rechtwinklig ausgeführt ist.

11. Elektromagnetisch betätigbares, hydraulisches Proportionalventil nach einem der Ansprüche 1 bis 10, **dadurch gekennzeichnet, daß** der Ventilsitz (58) an einer im Ventilteil (14) verankerten Lochblende (55) aus verschleißfestem Material gebildet ist.

12. Elektromagnetisch betätigbares, hydraulisches Proportionalventil nach einem der Ansprüche 1 bis 11, **dadurch gekennzeichnet, daß** das Ventilteil (14) ein aus Kunststoff gespritztes Bauteil ist.

13. Elektromagnetisch betätigbares, hydraulisches Proportionalventil nach einem der Ansprüche 1 bis 12, **dadurch gekennzeichnet, daß** das Magnetteil (12) ein Gehäuse (42) aufweist, das einstückig mit einem Gehäuse (43) des Ventilteils (14) verbunden ist.

14. Automatikgetriebe für Kraftfahrzeuge mit hydraulischen Steuereinrichtungen, die wenigstens ein Proportionalventil (10) nach einem der Ansprüche 1 bis 13 aufweisen.

## Claims

1. Electromagnetically actuatable hydraulic proportional valve (10) having a magnet part (12) made of an electrically drivable coil (18), a locationally fixed core (28) which projects into the interior of the coil (18), and a displacably guided armature (38) which is acted on by the coil (18) and which is coupled to a closing element (60), and having a valve part (14) which has in each case at least one inflow duct (50), a return flow duct (52), a working duct (54) and a valve seat (58) which controls, in an operative connection to the closing element (60), a pressure medium connection between the working duct (54) and the return flow duct (52), the closing element (60) having, at least in the region of its end which faces the valve seat (58), a sealing element (60c, 70) which has a conical external contour, the smaller end face of the sealing element facing the valve seat (58), **characterized in that** a flow detachment edge (60d) is formed at the end of the sealing element (60c, 70) which faces away from the valve seat (58), and **in that** the flow detachment edge (60d) is formed by the conical external contour of the sealing element (60c, 70) and a surface which surrounds, in an annular shape, a part (62, 36) which is connected to the sealing element (60c, 70) and is operatively connected to the armature (38), on the side of the sealing element (60c, 70) which faces away from the valve seat (58).

2. Electromagnetically actuatable hydraulic proportional valve according to Claim 1, **characterized in that** the flow detachment edge (60d) fulfils, with its dimensions, the two mathematical relationships specified below:

$$d/D \leq 0.9 \text{ and } L \geq (D-d)/2,$$

D designating the diameter of the flow detachment edge (60d), d designating the diameter of the component (60b, 36) which adjoins the flow detachment edge (60d) in the direction of the magnet part (12), and L designating the length of this component (60b, 36) which adjoins the flow detachment edge (60d) in the direction of the magnet part (12).

3. Electromagnetically actuatable hydraulic proportional valve according to Claim 1 or 2, **characterized in that** the sealing element (60c, 70) has a pot-shaped cross section with an end side which faces the valve seat (58) and is curved outwards in the manner of a spherical cap.

**4.** Electromagnetically actuatable hydraulic proportional valve according to one of Claims 1 to 3, **characterized in that** the armature (38) acts on the closing element (60) by means of a tappet (36), and **in that** the sealing element (70) of the closing element (60) is attached to this tappet (36).

**5.** Electromagnetically actuatable hydraulic proportional valve according to one of Claims 1 to 4, **characterized in that** a connecting section (60b) adjoins the sealing element (60c) of the closing element (60) in the direction of the magnet part (12) and a guide region (60a) adjoins said connecting section (60b).

**6.** Electromagnetically actuatable hydraulic proportional valve according to Claim 5, **characterized in that** the guide region (60a) and the connecting section (60b) have cylindrical cross sections.

**7.** Electromagnetically actuatable hydraulic proportional valve according to one of Claims 5 or 6, **characterized in that** the connecting section (60b) is formed by an annular groove with an essentially rectangular or square cross section, between the sealing element (60c) and the guide region (60a) of the closing element (60).

**8.** Electromagnetically actuatable hydraulic proportional valve according to one of Claims 5 to 7, **characterized in that** the closing element (60) has a central blind hole (62) which is enclosed in the region of the sealing element (60c) and into which part of the tappet (36) projects.

**9.** Electromagnetically actuatable hydraulic proportional valve according to one of Claims 5 to 8, **characterized in that** the armature (38) acts on the closing element (60) by means of a tappet (36), and **in that** between this closing element (60) and the tappet (36) there is at least one operative connection permitting radial movements between the two components.

**10.** Electromagnetically actuatable hydraulic proportional valve according to one of Claims 1 to 9, **characterized in that** the valve seat (58) of the valve part (14) is formed by a hole whose mouth is formed at a right angle at least in the region of the closing element (60).

**11.** Electromagnetically actuatable hydraulic proportional valve according to one of Claims 1 to 10, **characterized in that** the valve seat (58) is formed on a perforated plate (55) which is secured in the valve part (14) and is formed from a wear-resistant material.

**12.** Electromagnetically actuatable hydraulic proportional valve according to one of Claims 1 to 11, **characterized in that** the valve part (14) is a component which is injection-moulded from plastic.

**13.** Electromagnetically actuatable hydraulic proportional valve according to one of Claims 1 to 12, **characterized in that** the magnet part (12) has a housing (42) which is integrally connected to a housing (43) of the valve part (14).

**14.** Automatic gearbox for motor vehicles having hydraulic control devices which have at least one proportional valve (10) according to one of Claims 1 to 13.

## Revendications

**1.** °) Soupape proportionnelle hydraulique (10) à commande électromagnétique comprenant une partie magnétique (12) formée d'une bobine (18) commandée électriquement, d'un noyau fixe (28) pénétrant à l'intérieur de la bobine (18) ainsi que d'un induit (38) sollicité par la bobine (18) et guidé de manière coulissante, l'induit étant couplé à un organe d'obturation (60),
une partie de soupape (14) comprenant au moins un canal d'alimentation (50), un canal de retour (52), un canal actif (54) et un siège de soupape (58) coopérant avec un organe d'obturation (60) pour commander la liaison de fluide sous pression entre le canal actif (54) et le canal de retour (52),
l'organe d'obturation (60) ayant un organe d'étanchéité (60c, 70) au moins dans la zone de son extrémité tournée vers le siège de soupape (58), cet organe d'étanchéité ayant un contour extérieur tronconique et la petite base de cet organe étant tournée vers le siège de soupape (58),
**caractérisée en ce que**
l'extrémité de l'organe d'étanchéité (60c, 70) à l'opposé du siège de soupape (58) forme une arête de décrochage de veine de fluide (60d) et cette arête de décrochage (60d) est formée par le contour extérieur tronconique de l'organe d'étanchéité (60c, 70) et une surface entourant de façon annulaire une pièce (62, 36) reliée à l'organe d'étanchéité (60c, 70) et coopérant avec l'induit (38) du côté de l'organe d'étanchéité (60c, 70) à l'opposé du siège de soupape (58).

**2.** Soupape proportionnelle hydraulique à commande électromagnétique selon la revendication 1, **caractérisée en ce que**
l'arête de décrochage (60d) a des dimensions répondant aux deux relations mathématiques

suivantes :

$$d/D \le 0,9 \text{ et } L \ge (D-d)/2,$$

D étant le diamètre de l'arête de décrochage (60d), d étant le diamètre de la pièce (60b, 36) et L est la longueur de la pièce (60b, 36b) faisant suite à l'arête de décrochage (60d) en direction de la partie magnétique (12).

3. Soupape proportionnelle hydraulique à commande électromagnétique selon la revendication 1 ou 2, **caractérisée en ce que** l'organe d'étanchéité (60c, 70) présente une section en forme de pot avec une face frontale bombée de manière convexe, en forme de coupelle, tournée vers le siège de soupape (58).

4. Soupape proportionnelle hydraulique à commande électromagnétique selon l'une des revendications 1 à 3, **caractérisée en ce que** l'induit (38) agit par l'intermédiaire d'un poussoir (36) sur l'organe d'obturation (60) et l'organe d'étanchéité (70) de l'organe d'obturation (60) est fixé à ce poussoir (36).

5. Soupape proportionnelle hydraulique à commande électromagnétique selon l'une des revendications 1 à 4, **caractérisée en ce qu'** en direction de la partie magnétique (12), l'organe d'étanchéité (60c) de l'organe d'obturation (60) se poursuit par un segment de liaison (60b) et ensuite une zone de guidage (60a).

6. Soupape proportionnelle hydraulique à commande électromagnétique selon la revendication 5, **caractérisée en ce que** la zone de guidage (60a) et le segment de liaison (60b) ont des sections cylindriques.

7. Soupape proportionnelle hydraulique à commande électromagnétique selon l'une des revendications 5 ou 6, **caractérisée en ce que** le segment de liaison (60b) est formé entre l'organe d'étanchéité (60c) et la zone de guidage (60a) de l'organe d'obturation (60) par une rainure annulaire à section essentiellement rectangulaire ou carrée.

8. Soupape proportionnelle hydraulique à commande électromagnétique selon l'une des revendications 5 à 7, **caractérisée en ce que** l'organe d'obturation (60) présente un perçage borgne (62) central, fermé au niveau de l'organe d'étanchéité (60c), et dans lequel pénètre un segment du poussoir (36).

9. Soupape proportionnelle hydraulique à commande électromagnétique selon l'une des revendications 5 à 8, **caractérisée en ce que** l'induit (38) agit par l'intermédiaire d'un poussoir (36) sur l'organe d'obturation (60) et entre cet organe d'obturation (60) et le poussoir (36) il y a une liaison active autorisant au moins un mouvement radial entre ces deux pièces.

10. Soupape proportionnelle hydraulique à commande électromagnétique selon l'une des revendications 1 à 9, **caractérisée en ce que** le siège de soupape (58) de la partie de soupape (14) est formée par un perçage dont l'embouchure est de forme rectangulaire au moins dans la zone de l'organe d'obturation (60).

11. Soupape proportionnelle hydraulique à commande électromagnétique selon l'une des revendications 1 à 10, **caractérisée en ce que** le siège de soupape (58) est formé en une matière résistante à l'usure au niveau d'un diaphragme (55) accroché dans la partie de soupape (14).

12. Soupape proportionnelle hydraulique à commande électromagnétique selon l'une des revendications 1 à 11, **caractérisée en ce que** la partie de soupape (14) est une pièce injectée en matière plastique.

13. Soupape proportionnelle hydraulique à commande électromagnétique selon l'une des revendications 1 à 12, **caractérisée en ce que** la partie magnétique (12) comprend un boîtier (42) relié en une seule pièce au boîtier (43) de la partie de soupape (14).

14. Boîte de vitesses automatique de véhicule automobile comportant des installations de commandes hydrauliques ayant au moins une soupape proportionnelle (10) selon l'une des revendications 1 à 13.

# Fig. 1

# Fig. 2

# Fig. 3

36

62

60

60a

d

60b

60d

L

60c

D

# Fig. 4

36

d

60d

70

60

D